# EUROPEAN PATENT SPECIFICATION

(11) **EP 4 121 943 B1**
(45) Date of publication and mention of the grant of the patent: **22.10.2025**
(21) Application number: 21833625.3
(22) Date of filing: 25.06.2021
(51) Int. Cl.: G05D 1/00, G06T 7/70, B64C 39/02, B64D 47/08

(54) **SYSTEM OF MULTI-DRONE VISUAL CONTENT CAPTURING**
SYSTEM ZUR ERFASSUNG VON VISUELLEM INHALT MIT MEHREREN DRODEN
SYSTÈME DE CAPTURE DE CONTENU VISUEL MULTI-DRONE

(30) Priority: 30.06.2020 US 202016917013
(43) Date of publication of application: 25.01.2023
(73) Proprietor: Sony Group Corporation, Tokyo 108-0075 (JP)
(72) Inventor: LIU, Cheng-Yi, San Jose, CA 95121 (US); BERESTOV, Alexander, San Jose, CA 95138 (US)
(74) Representative: D Young & Co LLP
(86) International application number: PCT/US2021/039151
(87) International publication number: WO 2022/005901

(56) References cited:
- EP-A1- 3 428 765
- WO-A2-2019/226686
- RU-C1- 2 697 942
- US-A1- 2018 204 343
- US-A1- 2019 005 670
- NÄGELI TOBIAS ET AL: "Flycon", ACM TRANSACTIONS ON GRAPHICS, ACM, NY, US, vol. 37, no. 6, 4 December 2018 (2018-12-04), pages 1 - 14, XP058686851, ISSN: 0730-0301, DOI: 10.1145/3272127.3275022
- XU LAN ET AL: "FlyCap: Markerless Motion Capture Using Multiple Autonomous Flying Cameras", IEEE TRANSACTIONS ON VISUALIZATION AND COMPUTER GRAPHICS, IEEE, USA, vol. 24, no. 8, 1 August 2018 (2018-08-01), pages 2284 - 2297, XP011686207, ISSN: 1077-2626, [retrieved on 20180628], DOI: 10.1109/TVCG.2017.2728660

## Description

### Cross References to Related Applications

This application claims the benefit of U.S. Provisional Patent Application Serial No. 16/917,013, entitled SYSTEM OF MULTI-DRONE VISUAL CONTENT CAPTURING, filed on June 30, 2020 (020699-116500US).

### Background

The increasing availability of drones equipped with cameras has inspired a new style of cinematography based on capturing images of scenes that were previously difficult to access. While professionals have traditionally captured high-quality images by using precise camera trajectories with well controlled extrinsic parameters, a camera on a drone is always in motion even when the drone is hovering. This is due to the aerodynamic nature of drones, which makes continuous movement fluctuations inevitable. If only one drone is involved, it is still possible to estimate camera pose (a 6D combination of position and orientation) by simultaneous localization and mapping (SLAM), a technique which is well known in the field of robotics. However, it is often desirable to employ multiple cameras at different viewing spots simultaneously, allowing for complex editing and full 3D scene reconstruction. Conventional SLAM approaches work well for single-drone, single-camera situations but are not suited for the estimation of all the poses involved in multiple-drone or multiple-camera situations.

Other challenges in multi-drone cinematography include the complexity of integrating the video streams of images captured by the multiple drones, and the need to control the flight paths of all the drones such that a desired formation (or swarm pattern), and any desired changes in that formation over time, can be achieved. In current practice for professional cinematography involving drone, human operators have to operate two separate controllers on each drone, one controlling flight parameters, and one controlling camera pose. There are many negative implications: for the drones in terms of their size, weight and cost; for reliability of the system as a whole; and for the quality of the output scene reconstructions.

There is, therefore, a need for improved systems and methods for integrating images captured by cameras on multiple, moving drones, and for accurately controlling those drones (and possibly the cameras independently of the drones), so that the visual content necessary to reconstruct the scene of interest can be efficiently captured and processed. Ideally, the visual content integration would be done automatically, at an off-drone location, and the controlling, also performed at an off-drone location but not necessarily the same one, would involve automatic feedback control mechanisms, to achieve high precision in drone positioning, adaptive to aerodynamic noise, due to factors such as wind. It may also sometimes be beneficial to minimize the number of human operators required for system operation.

Prior art includes: NAGELI TOBIAS ET AL: "Flycon: Real-time environment independent multi-view human pose estimation with aerial vheicles," ACM TRANSACTIONS ON GRAPHICS, ACM, NY, US, vol. 37, no. 6, 4 December 2018, which discloses a method for estimation of human poses in real-time. A swarm of camera equipped flying robots follow a subject and always position themselves to optimally observe the markers, mounted on the subject. An iterative optimisation algorithm estimates the position of the joints of the subject and the position and orientation of each drone-mounted camera. The pose state estimate is used to compute the control inputs for the swarm for the next time step to keep the subject in view. The estimate of the global pose of one drone is used as reference frame to express all other poses and feature locations.

XU LAN ET AL: "FlyCap: Markerless Motion Capture Using Multiple Autonomous Flying Cameras," IEEE TRANSACTIONS ON VISUALIZATION AND COMPUTER GRAPHICS, IEEE, USA, vol. 24, no. 8 1 August 2018, pages 2284-2297, discloses a generation markerless motion capture technique to capture surface motions of moving characters using multiple autonomous unmanned aerial vehicles (UAVs), each integrated with an RGBD video camera, and a join optimization pipeline using the depths maps captured the UAVs.

Each of these prior art disclsoures describes a prior art device.

### Summary

The invention is defined by the appended claims.

A further understanding of the nature and the advantages of particular embodiments disclosed herein may be realized by reference of the remaining portions of the specification and the attached drawings.

### Brief Description of the Drawings

Figure 1 illustrates imaging a scene according to some embodiments.
Figure 2 illustrates imaging a scene according to the embodiments of Figure 1.
Figure 3 illustrates an example of how a drone agent may function according to some embodiments.
Figure 4 illustrates an overview of the computation of transforms between a pair of drone cameras according to some embodiments.
Figure 5 presents mathematical details of a least squares method applied to estimate the intersection of multiple vectors between two camera positions according to some embodiments.
Figure 6 shows how an initial solution to scaling may be achieved for two cameras, according to some embodiments.
Figure 7 shows how an initial rotation between coordinates for two cameras may be calculated, according to some embodiments.
Figure 8 summarizes the final step of the calculation to fully align the coordinates (position, rotation and scaling) for two cameras, according to some embodiments.
Figure 9 illustrates how a drone agent generates a depth map according to some embodiments.
Figure 10 illustrates interactions between the fly controller and the camera controller in some embodiments.
Figure 11 illustrates how flight and pose control for a swarm of drones is achieved according to some embodiments.
Figure 12 illustrates high-level data flow between components of the system in some embodiments.

### Detailed Description of Embodiments

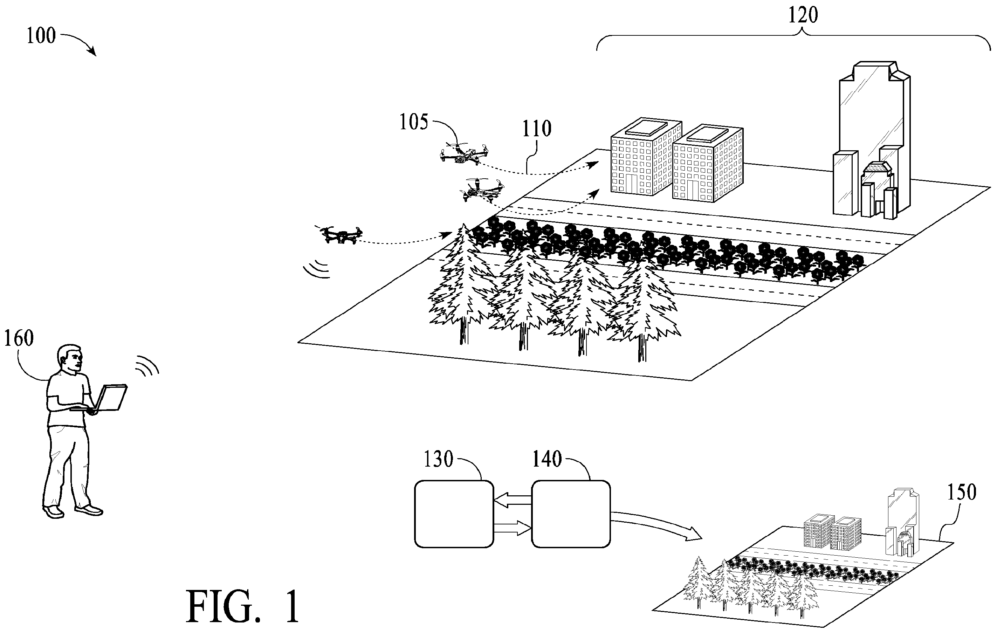

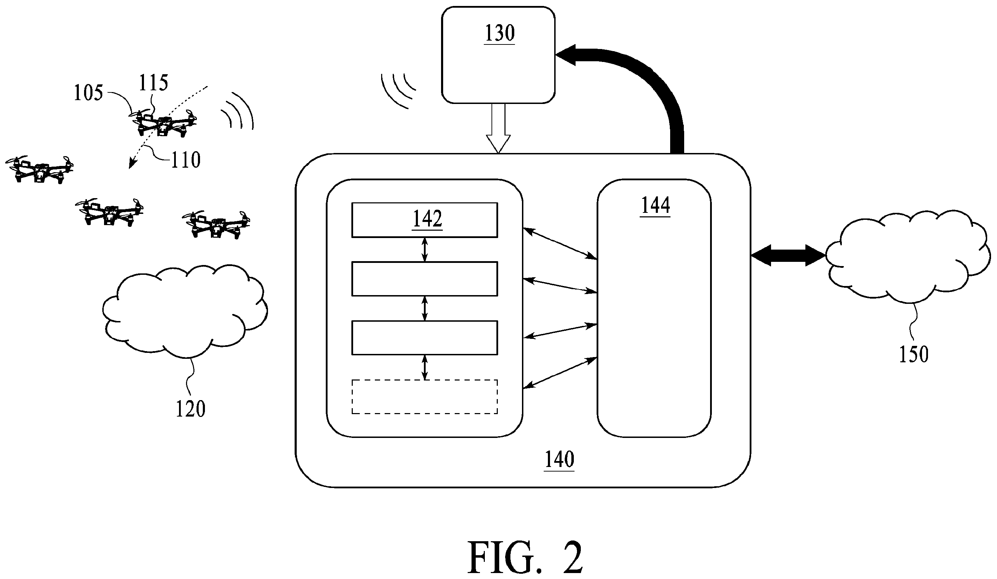

Figure 1 illustrates a system 100 for imaging a scene 120, according to some embodiments of the present invention. Figure 2 illustrates components of system 100 at a different level of detail. A plurality of drones is shown, each drone 105 moving along a corresponding path 110. Figure 1 shows fly controller 130 operated by a human 160, in wireless communication with each of the drones. The drones are also in wireless communication with camera controller 140, transmitting captured images thereto. Data are sent from camera controller 140 to fly controller 130 to facilitate flight control. Other data may optionally be sent from fly controller 130 to camera controller 140 to facilitate image processing therewithin. System output is provided in the form of a 3D reconstruction 150 of scene 120.

Figure 2 shows some of the internal organization of camera controller 140, comprising a plurality of drone agents 142 and a global optimizer 144, and flows of data, including feedback loops, between components of the system. The scene 120 and scene reconstruction 150 are represented in a more abstract fashion than in Figure 1, for simplicity.

Each drone agent 142 is "matched up" with one and only one drone, receiving images from a drone camera 115 within or attached to that drone 105. For simplicity, Figure 2 shows the drone cameras in the same relative positions and orientations on the various drones, but this is not necessarily the case in practice. Each drone agent processes each image (or frame from a video stream) received from the corresponding drone camera (in some cases in combination with fly command information received from fly controller 130) along with data characterizing the drone, drone camera and captured images, to generate (for example, using the SLAM technique) an estimate of drone camera pose in a coordinate frame local to that drone, pose being defined for the purposes of this disclosure as a combination of 3D position and 3D orientation. The characteristic data mentioned above typically includes drone ID, intrinsic camera parameters, and image capture parameters such as image timestamp, size, coding, and capture rate (fps).

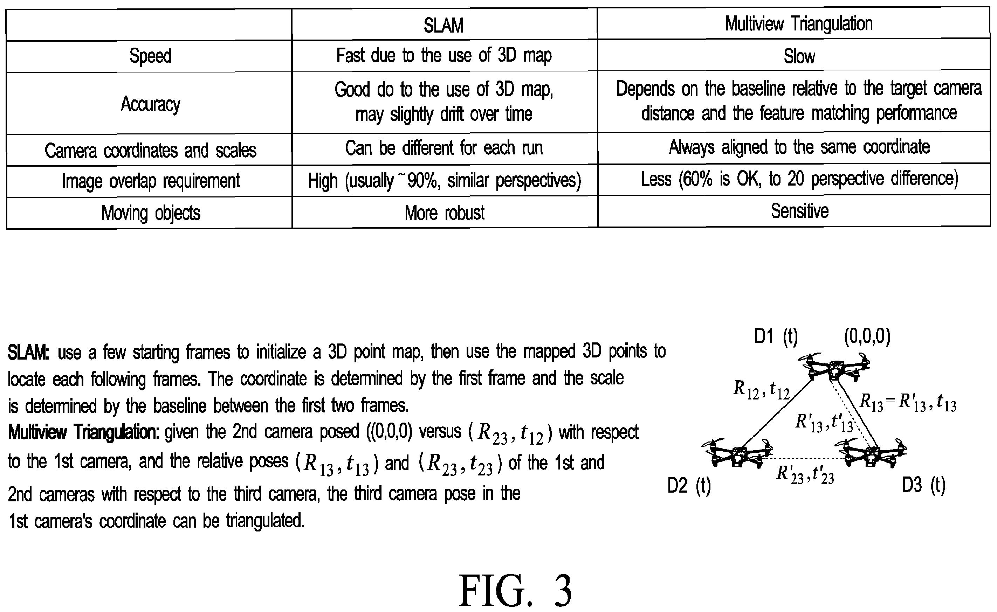

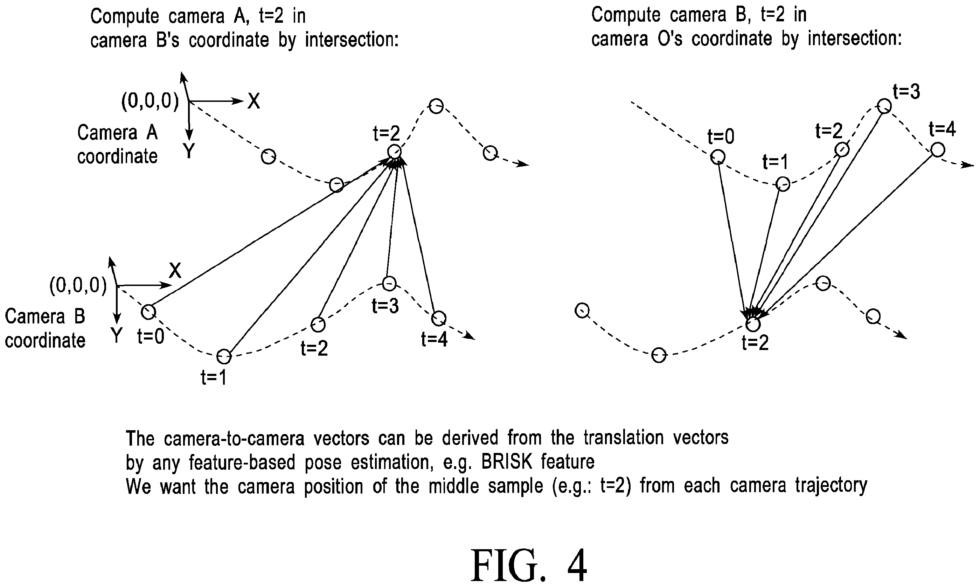

Each drone agent then collaborates with at least one other drone agent to compute a coordinate transformation specific to its own drone camera, so that the estimated camera pose can be expressed in a global coordinate system, shared by each of the drones. The computation may be carried out using a novel robust coordinate aligning algorithm, discussed in more detail below, with reference to Figures *3* *and* *4**.*

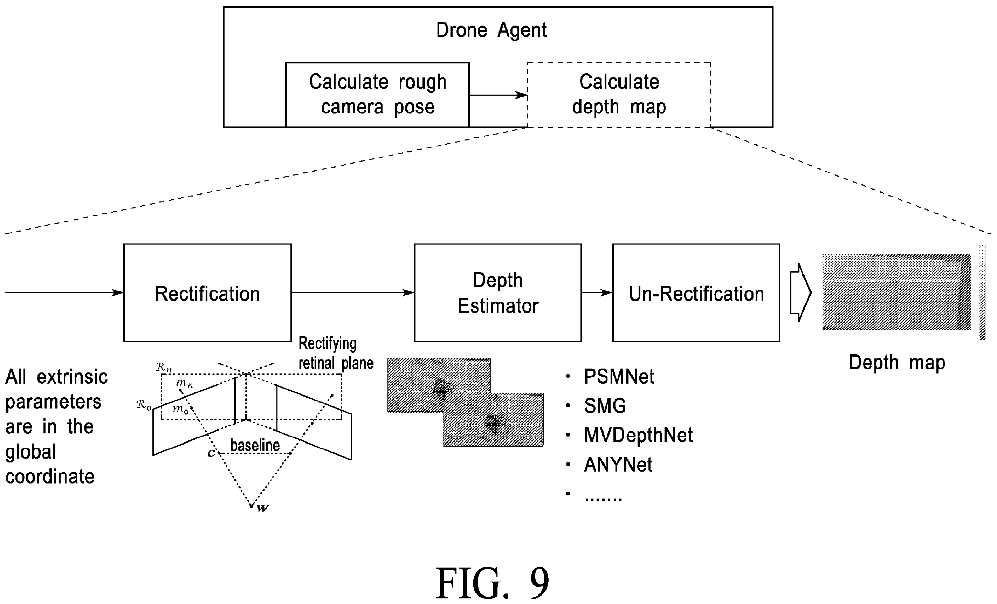

Each drone agent also generates a dense¹ depth map of the scene 120 as viewed by the corresponding drone camera for each pose from which the corresponding image was captured. depth map is calculated and expressed in the global coordinate system. In some cases, the map is generated by the drone agent processing a pair of images received from the same drone camera at slightly different times and poses, with their fields of view overlapping sufficiently to serve as a stereo pair. Well known techniques may be used by the drone agent to process such pairs to generate corresponding depth maps, as indicated in Figure 9, described below. In some other cases, the drone may include a depth sensor of some type, so that depth measurements are sent along with the RGB image pixels, forming an RGBD image (rather than a simple RGB one) that the drone agent processes to generate the depth map. In yet other cases, both options may be present, with information from a depth sensor being used as an adjunct to refine a depth map previously generated from stereo pair processing. Examples of in-built depth sensors include LiDAR systems, time-of-flight, and those provided by stereo-cameras.
¹ The word "dense" is used herein to mean that the resolution of the depth map is equal or very close to the resolution of the RGB images from which it is derived. In general modalities like LiDAR or RGB-D generate a depth map at a much lower resolution (smaller than VGA) than RGB. Visual keypoint-based methods generate even more sparse points with depth.

Each drone agent sends its own estimate of drone camera pose and the corresponding depth map, both in global coordinates, to global optimizer 144, along with data intrinsically characterizing the corresponding drone. On receiving all these data and an RGB image from each of the drone agents, global optimizer 144 processes these data collectively, generating a 3D point cloud representation that may be extended, corrected, and refined over time as more images and data are received. If a keypoint of an image is already present in the 3D point cloud, and a match is confirmed, the keypoint is said to be "registered". The main purposes of the processing are to validate 3D point cloud image data across the plurality of images, and to adjust the estimated pose and depth map for each drone camera correspondingly. In this way, a joint optimization may be achieved of the "structure" of the imaged scene reconstruction, and the "motion" or positioning in space and time of the drone cameras.

The global optimization depends in part on the use of any one of various state-of-the-art SLAM or Structure from Motion (SfM) optimizers now available, for example the graph-based optimizer BundleFusion, that generate 3D point cloud reconstructions from a plurality of images captured at different poses.

In the present invention, such an optimizer is embedded in a process-level iterative optimizer, sending updated (improved) camera pose estimates and depth maps to the fly controller after each cycle, which the fly controller can use to make adjustments to flight path and pose as and when necessary. Subsequent images sent by the drones to the drone agents are then processed by the drone agents as described above, involving each drone agent collaborating with at least one other, to yield further improved depth maps and drone camera pose estimates that are in turn sent on to the global optimizer, to be used in the next iterative cycle, and so one. Thus the accuracy of camera pose estimates and depth maps are improved, cycle by cycle, in turn improving the control of the drones' flight paths and the quality of the 3D point cloud reconstruction. When this reconstruction is deemed to meet a predetermined threshold of quality, the iterative cycle may cease, and the reconstruction at that point provided as the ultimate system output. Many applications for that output may readily be envisaged, including, for example, 3D scene reconstruction for cinematography, or view change experience.

Further details of how drone agents 142 shown in system 100 operate in various embodiments will now be discussed.

The problem of how to control the positioning and motion of multiple drone cameras is addressed in the present invention by a combination of SLAM and MultiView Triangulation (MVT). Figure 3 shows the strengths and weaknesses of the two techniques taken separately, and details of one embodiment of the proposed combination, which assumes that image sequences (or videos) have already been temporally synchronized, involves first running a SLAM process (e.g.: ORBSLAM2) on each drone to generate the local drone camera poses at each image (local SLAM poses in the following), then load for each drone a few (for example, 5) RGB image frames and their corresponding local SLAM poses. This determines consistent "local" coordinates and "local" scale for that drone camera. Next, a robust MT algorithm is run for a plurality of drones - Figure 4 schematically illustrates how transforms (rotation, scale, and translation) needed to align a second drone's local SLAM poses to the coordinate defined by a first drone's SLAM may be computed. This is then extended to each of the other drones in the plurality. Then the transform appropriate for each local SLAM pose is applied. The result is that spatial and temporal consistency are achieved for the images captured from the entire plurality of drone cameras.

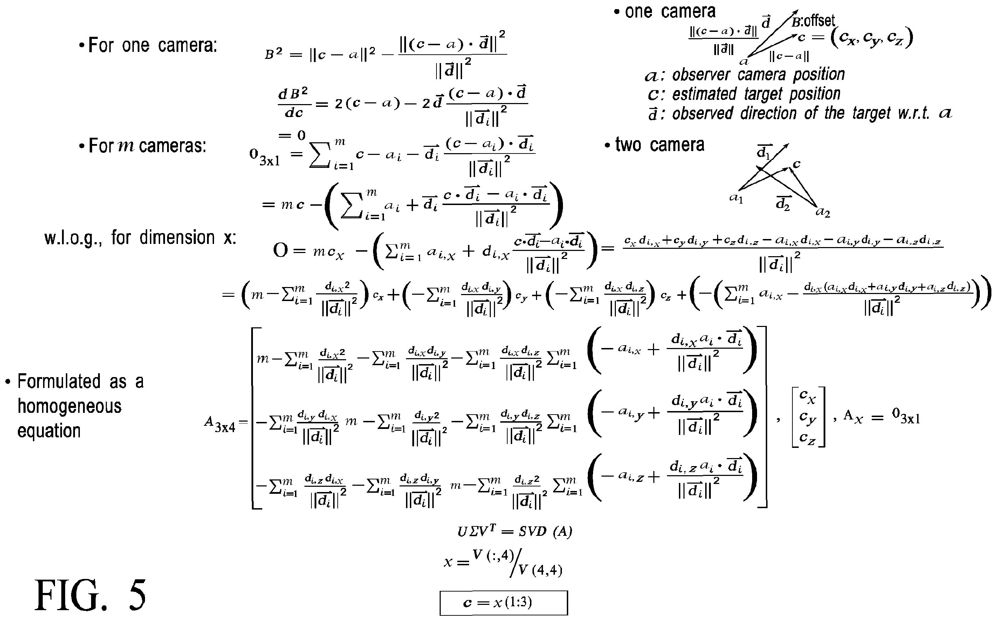

Mathematical details of the steps involved in the various calculations necessary to determining the transforms between two cameras are presented in Figures 5-8.

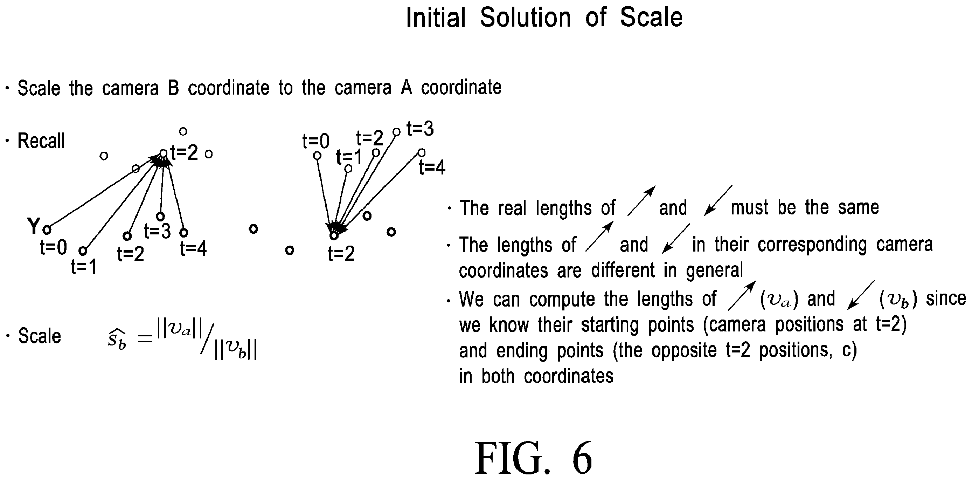

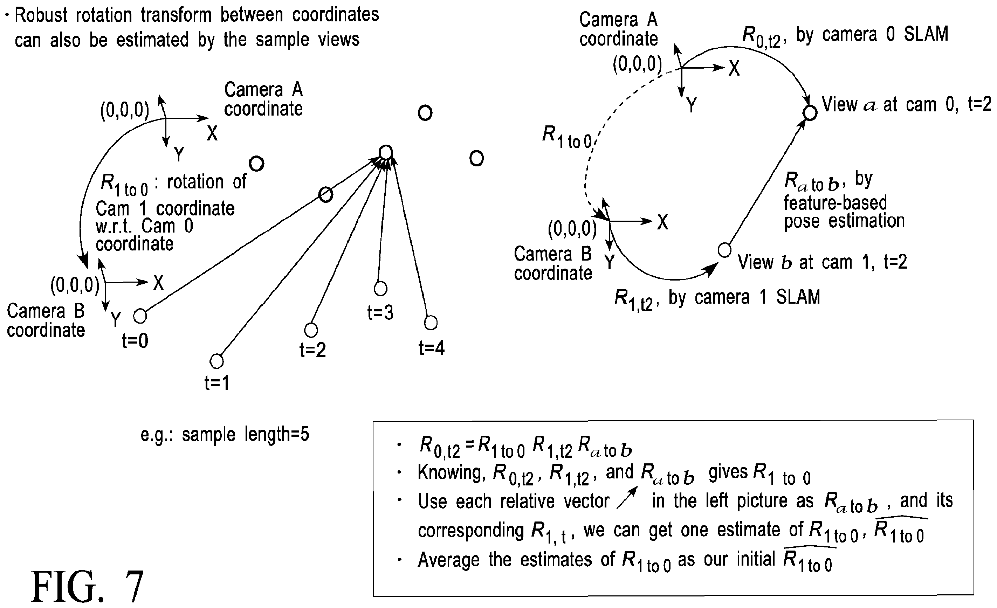

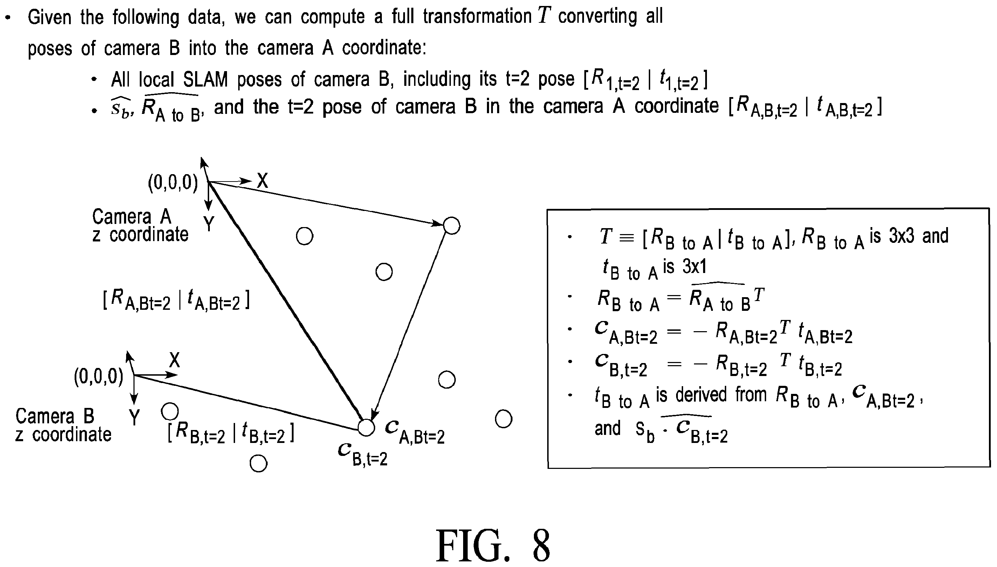

Figure 5 shows how a least squares method may be applied to estimate the intersection of multiple vectors between camera positions. Figure 6 shows how an initial solution to scaling may be achieved for two cameras. Figure 7 shows how an initial rotation between coordinates for two cameras may be calculated. To guarantee that the rotation matrix calculated is unbiased averaging is done over all 3 rotation degrees of freedom, using techniques well known in the art. Figure 8 summarizes the final step of the calculation to fully align the coordinates (position, rotation and scaling) for two cameras.

For simplicity, one of the drone agents may be considered the "master" drone agent, representing a "master" drone camera, whose coordinates whose coordinates may be considered to be the global coordinates, to which all the other drone camera images are aligned using the techniques described above.

Figure 9 illustrates in schematic form, internal functional steps a drone agent may perform *after* techniques such as those described above are used to align the corresponding camera's images to the master drone camera and in the process roughly estimate the corresponding camera pose. The post-pose-estimation steps, represented in the four blocks in the lower part of the picture, generate a depth map based on a pseudo-stereo pair of consecutively captured images, say the first image and the second image, according to some embodiments. The sequence of operations then carried out is image rectification (comparing images taken by the drone camera at slightly different times), depth estimation using any of various well-known tools such as PSMnet, SGM etc., and finally Un-Rectification to assign the calculated depths to pixels of the first image of the pair.

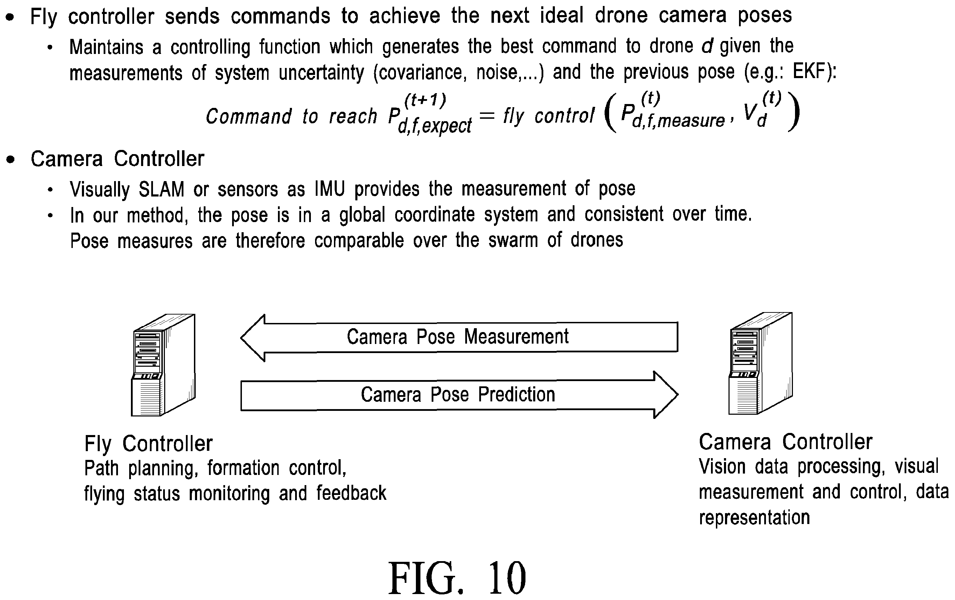

Figure 10 summarizes high level aspects of the interaction between the fly controller and the camera controller in some embodiments of system 100. These interactions take the form of a feedback loop between the fly controller and the camera controller, in which the fly controller uses the latest measured visual poses by the camera controller to update its controlling model, and the camera controller considers the commands sent by the flying controller in the SLAM computation of camera poses.

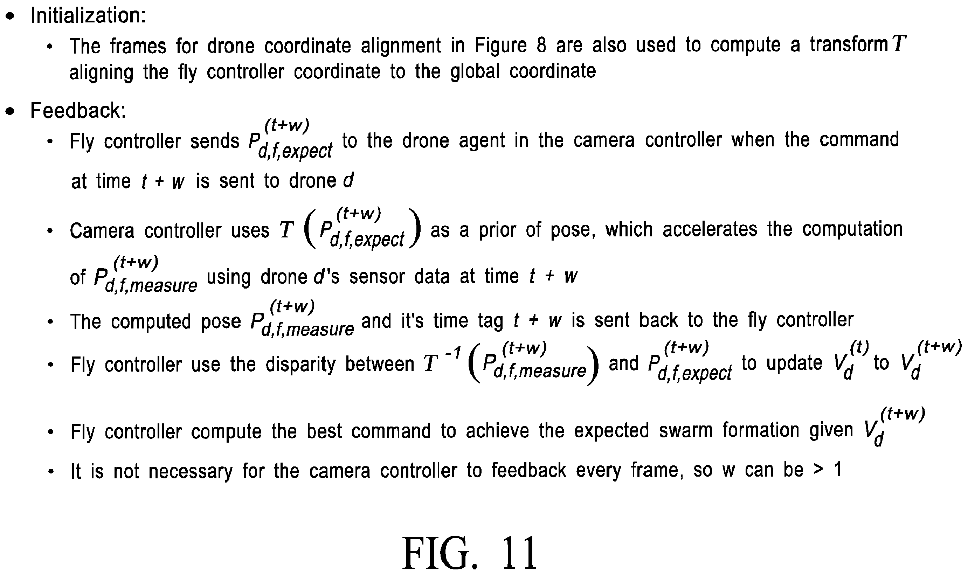

Figure 11 provides more detail of a typical process to achieve control of the flight paths or poses of the plurality of drones - termed feedback swarm control as it depends on continuous feedback between the two controllers. Key aspects of the resulting, inventive system may be listed as follows.

(1) Control is rooted in the global optimizer's 3D map, which serves as the latest and most accurate visual reference for camera positioning. (2) The fly controller uses the 3D map information to generate commands to each drone that compensate for positioning errors made apparent in the map. (3) Upon the arrival of an image from the drone, the drone agent starts to compute the "measured" position "around" the expected position which can avoid unlikely solutions. (4) For drone swarm formation, the feedback mechanism always adjusts each drone's pose by visual measures, and the formation distortion due to drift is limited.

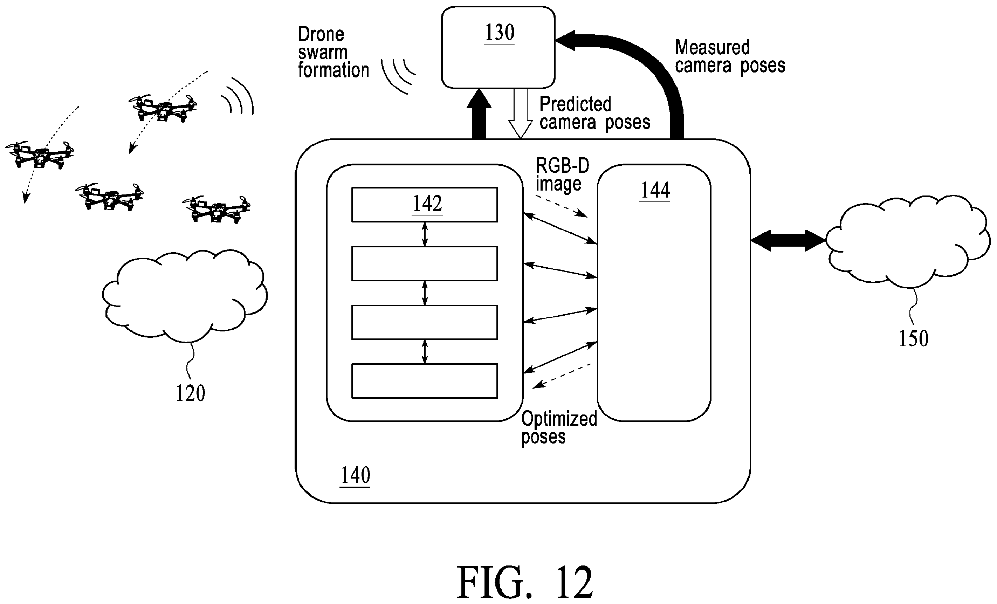

Figure 12 labels information flow, showing the "outer" control feedback loop between fly controller 130 and camera controller 140, integrating those two major components of system 100, and "inner" feedback loops between global optimizer 144 and each drone agent 142. The global optimizer in camera controller 140 provides fully optimized pose data (rotation + position) to the fly controller as a channel of observations, and the fly controller considers these observations in its controlling parameter estimation, so the drone commands sent by the fly controller will respond to the latest pose uncertainties. Continuing the outer feedback loop, the fly controller shares its motion commands with the drone agents 142 in the camera controller. These commands are prior information to constrain and accelerate the optimization of next camera pose computation inside the camera controller. The inner feedback loops between global optimizer 144 and each drone agent 142 are indicated by the double headed arrows between those components in the Figure.

Embodiments described herein provide various benefits in systems and methods for the capture and integration of visual content using a plurality of camera-equipped drones. In particular, embodiments enable automatic spatial alignment or coordination of drone trajectories and camera poses based purely on the visual content of the images those cameras capture, and the computation of consistent 3D point clouds, depth maps, and camera poses among all drones, as facilitated by the proposed iterative global optimizer. Successful operation does not rely on the presence of depth sensors (although they may be a useful adjunct) as the proposed SLAM-MT mechanisms in the camera controller can generate scale-consistent RGB-D image data simply using the visual content of successivel captured images from multiple (even much greater than 2) drones. Such data are invaluable in modern high-quality 3D scene reconstruction.

The novel local-to-global coordinate transform method described above is based on matching multiple pairs of images such that a multi-to-one global match is made, which provides robustness. In contrast with prior art systems, the image processing performed by the drone agents to calculate their corresponding camera poses and depth maps does not depend on the availability of a global 3D map. Each drone agent can generate a dense depth map by itself given a pair of RGB images and their corresponding camera poses, and then transform the depth map and camera poses into global coordinates before delivering the results to the global optimizer. Therefore, the operation of the global optimizer of the present invention is simpler, dealing with the camera poses and depth maps in a unified coordinate system.

It should be noted that two loops of data transfer are involved. The outer loop operates between the fly controller and the camera controller to provide global positioning accuracy while the inner loop (which is made up of multiple sub-loops) operates between drone agents and the global optimizer within the camera controller to provide structure and motion accuracy.

Although the description has been described with respect to particular embodiments thereof, these particular embodiments are merely illustrative, and not restrictive. Applications include professional 3D scene capture, digital content asset generation, a real-time review tool for studio capturing, and drone swarm formation and control. Moreover, since the present invention can handle multiple drones performing complicated 3D motion trajectories, it can also be applied to process cases of lower dimensional trajectories such as scans by a team of robots.

Any suitable programming language can be used to implement the routines of particular embodiments including C, C++*,* Java, assembly language, etc. Different programming techniques can be employed such as procedural or object oriented. The routines can execute on a single processing device or multiple processors. Although the steps, operations, or computations may be presented in a specific order, this order may be changed in different particular embodiments. In some particular embodiments, multiple steps shown as sequential in this specification can be performed at the same time.

Particular embodiments may be implemented in a computer-readable storage medium for use by or in connection with the instruction execution system, apparatus, system, or device. Particular embodiments can be implemented in the form of control logic in software or hardware or a combination of both. The control logic, when executed by one or more processors, may be operable to perform that which is described in particular embodiments.

Particular embodiments may be implemented by using a programmed general purpose digital computer, by using application specific integrated circuits, programmable logic devices, field programmable gate arrays, optical, chemical, biological, quantum or nanoengineered systems, components and mechanisms may be used. In general, the functions of particular embodiments can be achieved by any means as is known in the art. Distributed, networked systems, components, and/or circuits can be used. Communication, or transfer, of data may be wired, wireless, or by any other means.

It will also be appreciated that one or more of the elements depicted in the drawings/figures can also be implemented in a more separated or integrated manner, or even removed or rendered as inoperable in certain cases, as is useful in accordance with a particular application. It is also within the spirit and scope to implement a program or code that can be stored in a machine-readable medium to permit a computer to perform any of the methods described above.

A "processor" includes any suitable hardware and/or software system, mechanism or component that processes data, signals or other information. A processor can include a system with a general-purpose central processing unit, multiple processing units, dedicated circuitry for achieving functionality, or other systems. Processing need not be limited to a geographic location, or have temporal limitations. For example, a processor can perform its functions in "real time," "offline," in a "batch mode," etc. Portions of processing can be performed at different times and at different locations, by different (or the same) processing systems. Examples of processing systems can include servers, clients, end user devices, routers, switches, networked storage, etc. A computer may be any processor in communication with a memory. The memory may be any suitable processor-readable storage medium, such as random-access memory (RAM), read-only memory (ROM), magnetic or optical disk, or other non-transitory media suitable for storing instructions for execution by the processor.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

## Claims

1. A system (100) of imaging a scene, the system comprising:
a plurality of drones (105), each drone moving along a corresponding flight path (110) over the scene, and each drone having a drone camera capturing, at a corresponding first pose and a corresponding first time, a corresponding first image of the scene;
a fly controller (130) that controls the flight path of each drone, in part by using estimates of the first pose of each drone camera provided by a camera controller, to create and maintain a desired pattern of drones with desired camera poses over the scene; and
the camera controller (140), the camera controller receiving, from the plurality of drones, a corresponding plurality of captured images of the scene, and processing the received plurality of captured images, to generate a 3D representation of the scene as a system output, and to provide the estimates of the first pose of each drone camera to the fly controller;
wherein the camera controller comprises:
a plurality of drone agents, each drone agent communicatively coupled to one and only one corresponding drone to receive a corresponding captured first image; and
a global optimizer communicatively coupled to each of the drone agents and to the fly controller;
wherein the drone agents and the global optimizer in the camera controller collaborate to iteratively improve, for each drone, an estimate of first pose and a depth map characterizing the scene as imaged by the corresponding drone camera, calculated and expressed by each drone agent in a global coordinate system, and to use the estimates and depth maps from all of the drones to create the 3D representation of the scene; and
wherein the fly controller receives, from the camera controller, the estimate of first pose for each of the drone cameras, adjusting the corresponding flight path and drone camera pose accordingly if necessary;
wherein each drone agent:
collaborates with one other drone agent such that the first images captured by the corresponding drones are processed, using data characterizing the corresponding drones and image capture parameters, to generate estimates of the first pose for the corresponding drones; and
collaborates with the global optimizer to iteratively improve the first pose estimate for the drone camera of the drone to which the drone agent is coupled, and to iteratively improve the corresponding depth map.

2. The system of claim 1,
wherein the depth map corresponding to each drone is generated by a corresponding drone agent based on either i) processing the first image and a second image of the scene, captured by a corresponding drone camera at a corresponding second pose and a corresponding second time, and received by the corresponding drone agent or ii) processing the first image and depth data generated by a depth sensor in the corresponding drone.

3. The system of claim 2, wherein generating estimates of the first pose of each drone camera comprises transforming pose-related data expressed in local coordinate systems, specific to each drone, to a global coordinate system shared by the plurality of drones, the transformation comprising a combination of Simultaneous Location and Mapping, SLAM, and Multiview Triangulation, MT.

4. The system of claim 1, wherein the global optimizer:
generates and iteratively improves the 3D representation of the scene based on input from each of the plurality of drone agents, the input comprising data characterizing the corresponding drone, and the corresponding processed first image, first pose estimate, and depth map; and
provides the pose estimates for the drone cameras of the plurality of drones to the fly controller.

5. The system of claim 4, wherein the iterative improving carried out by the global optimizer comprises a loop process in which drone camera pose estimates and depth maps are successively and iteratively improved until the 3D representation of the scene satisfies a predetermined threshold of quality.

6. A method of imaging a scene, the method comprising:
deploying a plurality of drones (105), each drone moving along a corresponding flight path (110) over the scene, and each drone having a camera capturing, at a corresponding first pose and a corresponding first time, a corresponding first image of the scene;
using a fly controller (130) to control the flight path of each drone, in part by using estimates of the first pose of each camera provided by a camera controller, to create and maintain a desired pattern of drones with desired camera poses over the scene; and
using a camera controller (140) to receive, from the plurality of drones, a corresponding plurality of captured images of the scene, and to process the received plurality of captured images, to generate a 3D representation of the scene as a system output, and to provide the estimates of the first pose of each camera to the fly controller;
wherein the camera controller comprises:
a plurality of drone agents, each drone agent communicatively coupled to one and only one corresponding drone to receive a corresponding captured first image; and
a global optimizer communicatively coupled to each of the drone agents and to the fly controller; and
wherein the drone agents and the global optimizer in the camera controller collaborate to iteratively improve, for each drone, an estimate of the first pose and a depth map characterizing the scene as imaged by the corresponding drone camera, calculated and expressed by each drone agent in a global coordinate system, and to use the estimates and depth maps from all of the drones to create the 3D representation of the scene; and
wherein the fly controller receives, from the camera controller, the improved estimates of first pose, for each of the drone cameras, adjusting the corresponding flight path and drone camera pose accordingly if necessary;
wherein the collaboration comprises:
each drone agent collaborating with one other drone agent to process the first images captured by the corresponding drones, using data characterizing those drones and image capture parameters for the corresponding captured images, to generate estimates of the first pose for the corresponding drones; and
each drone agent collaborating with the global optimizer to iteratively improve the first pose estimate for the drone camera of the drone to which the drone agent is coupled, and to iteratively improve the corresponding depth map.

7. The method of claim 6,
wherein the depth map corresponding to each drone is generated by a corresponding drone agent based on either i) processing the first image and a second image of the scene, captured by a corresponding drone camera at a corresponding second pose and a corresponding second time, and received by the corresponding drone agent or ii) processing the first image and depth data generated by a depth sensor in a corresponding drone.

8. The method of claim 6, wherein generating estimates of the first pose of each drone camera comprises transforming pose-related data expressed in local coordinate systems, specific to each drone, to a global coordinate system shared by the plurality of drones, the transformation comprising a combination of Simultaneous Location and Mapping, SLAM, and Multiview Triangulation, MT.

9. The method of claim 7, wherein the global optimizer:
generates and iteratively improves the 3D representation of the scene based on input from each of the plurality of drone agents, the input comprising data characterizing the corresponding drone, and the corresponding processed first image, first pose estimate, and depth map; and
provides the first pose estimates for the plurality of drone cameras to the fly controller.

10. The method of claim 9, wherein the iterative improving carried out by the global optimizer comprises a loop process in which drone camera pose estimates and depth maps are successively and iteratively improved until the 3D representation of the scene satisfies a predetermined threshold of quality.

## Patentansprüche

1. System (100) zum Abbilden einer Szene, das System umfassend:
eine Vielzahl von Drohnen (105), wobei sich jede Drohne entlang einer entsprechenden Flugbahn (110) über der Szene bewegt und jede Drohne eine Drohnenkamera aufweist, die in einer entsprechenden ersten Lage und zu einem entsprechenden ersten Zeitpunkt ein entsprechendes erstes Bild der Szene aufnimmt;
eine Flugsteuerung (130), die die Flugbahn jeder Drohne steuert, teilweise durch Verwenden von Schätzungen der ersten Lage jeder Drohnenkamera, die durch eine Kamerasteuerung bereitgestellt werden, um ein gewünschtes Muster von Drohnen mit gewünschten Kameralagen über der Szene zu erstellen und beizubehalten; und
die Kamerasteuerung (140), wobei die Kamerasteuerung von der Vielzahl von Drohnen eine entsprechende Vielzahl aufgenommener Bilder der Szene empfängt und die empfangene Vielzahl aufgenommener Bilder verarbeitet, um eine 3D-Darstellung der Szene als eine Systemausgabe zu erzeugen und um der Flugsteuerung die Schätzungen der ersten Lage jeder Drohnenkamera bereitzustellen;
wobei die Kamerasteuerung umfasst:
eine Vielzahl von Drohnenagenten, wobei jeder Drohnenagent mit einer und nur einer entsprechenden Drohne kommunikativ gekoppelt ist, um ein entsprechendes aufgenommenes erstes Bild zu empfangen; und
einen globalen Optimierer, der mit jedem der Drohnenagenten und mit der Flugsteuerung kommunikativ verbunden ist;
wobei die Drohnenagenten und der globale Optimierer in der Kamerasteuerung zusammenarbeiten, um für jede Drohne eine Schätzung der ersten Lage und eine Tiefenkarte iterativ zu verbessern, die die Szene als durch die entsprechende Drohnenkamera abgebildet, durch jeden Drohnenagenten in einem globalen Koordinatensystem berechnet und ausgedrückt kennzeichnet, und um die Schätzungen und Tiefenkarten aller Drohnen zu verwenden, um die 3D-Darstellung der Szene zu erstellen; und
wobei die Flugsteuerung von der Kamerasteuerung die Schätzung der ersten Lage für jede der Drohnenkameras empfängt, wobei die entsprechende Flugbahn und Drohnenkameralage bei Bedarf demgemäß angepasst wird;
wobei jeder Drohnenagent:
mit einem anderen Drohnenagenten derart zusammenarbeitet, dass die ersten Bilder, die durch die entsprechenden Drohnen aufgenommen werden, unter Verwendung von Daten, die die entsprechenden Drohnen kennzeichnen, und von Bildaufnahmeparametern verarbeitet werden, um Schätzungen der ersten Lage für die entsprechenden Drohnen zu erzeugen; und
mit dem globalen Optimierer zusammenarbeitet, um die erste Lageschätzung für die Drohnenkamera der Drohne, mit der der Drohnenagent gekoppelt ist, iterativ zu verbessern und die entsprechende Tiefenkarte iterativ zu verbessern.

2. System nach Anspruch 1,
wobei die Tiefenkarte, die jeder Drohne entspricht, durch einen entsprechenden Drohnenagenten entweder basierend auf i) dem Verarbeiten des ersten Bilds und eines zweiten Bilds der Szene, das durch eine entsprechende Drohnenkamera an einer entsprechenden zweiten Lage und zu einem entsprechenden zweiten Zeitpunkt aufgenommen und durch den entsprechenden Drohnenagenten empfangen wird, oder ii) dem Verarbeiten des ersten Bilds und der Tiefendaten, die durch einen Tiefensensor in der entsprechenden Drohne erzeugt werden, erzeugt wird.

3. System nach Anspruch 2, wobei das Erzeugen von Schätzungen der ersten Lage jeder Drohnenkamera ein Umwandeln von lagenbezogenen Daten, die in lokalen Koordinatensystemen ausgedrückt sind, die für jede Drohne spezifisch sind, in ein globales Koordinatensystem umfasst, das durch die Vielzahl von Drohnen gemeinsam genutzt wird, die Umwandlung umfassend eine Kombination aus simultaner Positionsbestimmung und Kartierung, SLAM, und Mehrfachansichtstriangulation, MT.

4. System nach Anspruch 1, wobei der globale Optimierer:
die 3D-Darstellung der Szene basierend auf einer Eingabe von jedem der Vielzahl von Drohnenagenten iterativ erzeugt und verbessert, die Eingabe umfassend Daten, die die entsprechende Drohne kennzeichnen, und das entsprechende verarbeitete erste Bild, die erste Lage-Schätzung und die Tiefenkarte; und
der Flugsteuerung die Lageschätzungen für die Drohnenkameras der Vielzahl von Drohnen bereitstellt.

5. System nach Anspruch 4, wobei das iterative Verbessern, das durch den globalen Optimierer vorgenommen wird, einen Schleifenprozess umfasst, in dem die Lageschätzungen und Tiefenkarten der Drohnenkamera sukzessive und iterativ verbessert werden, bis die 3D-Darstellung der Szene einen zuvor bestimmten Qualitätsschwellenwert erfüllt.

6. Verfahren zum Abbilden einer Szene, das Verfahren umfassend:
Einsetzen einer Vielzahl von Drohnen (105), wobei sich jede Drohne entlang einer entsprechenden Flugbahn (110) über der Szene bewegt und jede Drohne eine Kamera aufweist, die in einer entsprechenden ersten Lage und zu einem entsprechenden ersten Zeitpunkt ein entsprechendes erstes Bild der Szene aufnimmt;
Verwenden einer Flugsteuerung (130), um die Flugbahn jeder Drohne zu steuern, teilweise durch Verwenden von Schätzungen der ersten Lage jeder Kamera, die durch eine Kamerasteuerung bereitgestellt werden, um ein gewünschtes Muster von Drohnen mit gewünschten Kameralagen über der Szene zu erstellen und beizubehalten; und
Verwenden einer Kamerasteuerung (140), um von der Vielzahl von Drohnen eine entsprechende Vielzahl aufgenommener Bilder der Szene zu empfangen und um die empfangene Vielzahl aufgenommener Bilder zu verarbeiten, um eine 3D-Darstellung der Szene als eine Systemausgabe zu erzeugen und um der Flugsteuerung die Schätzungen der ersten Lage jeder Kamera bereitzustellen;
wobei die Kamerasteuerung umfasst:
eine Vielzahl von Drohnenagenten, wobei jeder Drohnenagent mit einer und nur einer entsprechenden Drohne kommunikativ gekoppelt ist, um ein entsprechendes aufgenommenes erstes Bild zu empfangen; und
einen globalen Optimierer, der mit jedem der Drohnenagenten und mit der Flugsteuerung kommunikativ verbunden ist; und
wobei die Drohnenagenten und der globale Optimierer in der Kamerasteuerung zusammenarbeiten, um für jede Drohne eine Schätzung der ersten Lage und eine Tiefenkarte iterativ zu verbessern, die die Szene als durch die entsprechende Drohnenkamera abgebildet, durch jeden Drohnenagenten in einem globalen Koordinatensystem berechnet und ausgedrückt kennzeichnet, und um die Schätzungen und Tiefenkarten aller Drohnen zu verwenden, um die 3D-Darstellung der Szene zu erstellen; und
wobei die Flugsteuerung von der Kamerasteuerung die verbesserten Schätzungen der ersten Lage für jede der Drohnenkameras empfängt, wobei die entsprechende Flugbahn und Drohnenkameralage bei Bedarf demgemäß angepasst wird;
wobei die Zusammenarbeit umfasst:
jeder Drohnenagent arbeitet einem anderen Drohnenagenten zusammen, um die ersten Bilder zu verarbeiten, die durch die entsprechenden Drohnen aufgenommen werden, unter Verwendung von Daten, die diese Drohnen kennzeichnen, und Bildaufnahmeparametern für die entsprechenden aufgenommenen Bilder, um Schätzungen der ersten Lage für die entsprechenden Drohnen zu erzeugen; und
wobei jeder Drohnenagent mit dem globalen Optimierer zusammenarbeitet, um die erste Lageschätzung für die Drohnenkamera der Drohne, mit der der Drohnenagent gekoppelt ist, iterativ zu verbessern und um die entsprechende Tiefenkarte iterativ zu verbessern.

7. Verfahren nach Anspruch 6,
wobei die Tiefenkarte, die jeder Drohne entspricht, durch einen entsprechenden Drohnenagenten entweder basierend auf i) dem Verarbeiten des ersten Bilds und eines zweiten Bilds der Szene, das durch eine entsprechende Drohnenkamera an einer entsprechenden zweiten Lage und zu einem entsprechenden zweiten Zeitpunkt aufgenommen und durch den entsprechenden Drohnenagenten empfangen wird, oder ii) dem Verarbeiten des ersten Bilds und der Tiefendaten, die durch einen Tiefensensor in einer entsprechenden Drohne erzeugt werden, erzeugt wird.

8. Verfahren nach Anspruch 6, wobei das Erzeugen von Schätzungen der ersten Lage jeder Drohnenkamera das Umwandeln von lagenbezogenen Daten, die in lokalen Koordinatensystemen ausgedrückt sind, die für jede Drohne spezifisch sind, in ein globales Koordinatensystem umfasst, das durch die Vielzahl von Drohnen gemeinsam genutzt wird, die Umwandlung umfassend eine Kombination aus simultaner Positionsbestimmung und Kartierung, SLAM, und Mehrfachansichtstriangulation, MT.

9. Verfahren nach Anspruch 7, wobei der globale Optimierer:
die 3D-Darstellung der Szene basierend auf der Eingabe von jedem der Vielzahl von Drohnenagenten iterativ erzeugt und verbessert, die Eingabe umfassend Daten, die die entsprechende Drohne kennzeichnen, und das entsprechende verarbeitete erste Bild, die erste Lage-Schätzung und die Tiefenkarte; und
der Flugsteuerung die ersten Lageschätzungen für die Vielzahl von Drohnenkameras bereitstellt.

10. Verfahren nach Anspruch 9, wobei das iterative Verbessern, das durch den globalen Optimierer vorgenommen wird, einen Schleifenprozess umfasst, in dem die Lagenschätzungen und Tiefenkarten der Drohnenkamera sukzessive und iterativ verbessert werden, bis die 3D-Darstellung der Szene einen zuvor bestimmten Qualitätsschwellenwert erfüllt.

## Revendications

1. Système (100) d'imagerie d'une scène, le système comprenant :
une pluralité de drones (105), chaque drone se déplaçant le long d'une trajectoire de vol (110) correspondante sur la scène, et chaque drone ayant une caméra de drone qui capture, dans une première pose correspondante et à un premier moment correspondant, une première image correspondante de la scène ;
un dispositif de commande de vol (130) qui commande la trajectoire de vol de chaque drone, en partie en utilisant des estimations de la première pose de chaque caméra de drone fournies par un dispositif de commande de caméra, afin de créer et de maintenir un motif souhaité de drones avec des poses de caméra souhaitées sur la scène ; et
le dispositif de commande de caméra (140), le dispositif de commande de caméra recevant, à partir de la pluralité de drones, une pluralité correspondante d'images capturées de la scène, et traitant la pluralité reçue d'images capturées, afin de générer une représentation 3D de la scène en tant que sortie de système, et de fournir les estimations de la première pose de chaque caméra de drone au dispositif de commande de vol ;
dans lequel le contrôleur de caméra comprend :
une pluralité d'agents de drone, chaque agent de drone étant couplé de manière communicative à un et un seul drone correspondant afin de recevoir une première image capturée correspondante ; et
un optimiseur global couplé de manière communicative à chacun des agents de drone et au dispositif de commande de vol ;
dans lequel les agents de drone et l'optimiseur global dans le dispositif de commande de caméra collaborent pour améliorer de manière itérative, pour chaque drone, une estimation de première pose et une carte de profondeur caractérisant la scène telle qu'imagée par la caméra de drone correspondante, calculée et exprimée par chaque agent de drone dans un système de coordonnées global, et pour utiliser les estimations et les cartes de profondeur à partir de tous les drones pour créer la représentation en 3D de la scène ; et
dans lequel le dispositif de commande de vol reçoit, à partir du dispositif de commande de caméra, l'estimation de première pose pour chacune des caméras de drone, ajustant la trajectoire de vol correspondante et la pose de caméra de drone en conséquence, si nécessaire ;
dans lequel chaque agent de drone :
collabore avec un autre agent de drone de sorte que les premières images capturées par les drones correspondants sont traitées, à l'aide de données caractérisant les drones correspondants et les paramètres de capture d'image, afin de générer des estimations de la première pose pour les drones correspondants ; et
collabore avec l'optimiseur global pour améliorer de manière itérative l'estimation de première pose pour la caméra de drone du drone auquel l'agent de drone est couplé, et pour améliorer de manière itérative la carte de profondeur correspondante.

2. Système selon la revendication 1,
dans lequel la carte de profondeur correspondant à chaque drone est générée par un agent de drone correspondant sur la base i) du traitement de la première image et d'une seconde image de la scène, capturées par une caméra de drone correspondante dans une seconde pose correspondante et à un second moment correspondant, et reçues par l'agent de drone correspondant ou ii) du traitement de la première image et des données de profondeur générées par un capteur de profondeur dans le drone correspondant.

3. Système selon la revendication 2, dans lequel la génération d'estimations de la première pose de chaque caméra de drone comprend la transformation de données liées à la pose exprimées dans des systèmes de coordonnées locaux, spécifiques à chaque drone, en un système de coordonnées global partagé par la pluralité de drones, la transformation comprenant une combinaison de localisation et de cartographie simultanées (SLAM), et de triangulation multivue (MT).

4. Système selon la revendication 1, dans lequel l'optimiseur global :
génère et améliore de manière itérative la représentation 3D de la scène sur la base d'entrée à partir de chacun de la pluralité d'agents de drone, l'entrée comprenant des données caractérisant le drone correspondant, et la première image traitée, l'estimation de première pose et la carte de profondeur correspondantes ; et
fournit les estimations de pose pour les caméras de drone de la pluralité de drones au dispositif de commande de vol.

5. Système selon la revendication 4, dans lequel l'amélioration itérative effectuée par l'optimiseur global comprend un processus en boucle dans lequel des estimations de pose de caméra de drone et des cartes de profondeur sont successivement et itérativement améliorées jusqu'à ce que la représentation 3D de la scène satisfasse à un seuil de qualité prédéterminé.

6. Procédé d'imagerie d'une scène, le procédé comprenant :
le déploiement d'une pluralité de drones (105), chaque drone se déplaçant le long d'une trajectoire de vol (110) correspondante sur la scène, et chaque drone ayant une caméra qui capture, dans une première pose correspondante et à un premier moment correspondant, une première image correspondante de la scène ;
l'utilisation d'un dispositif de commande de vol (130) pour commander la trajectoire de vol de chaque drone, en partie en utilisant des estimations de la première pose de chaque caméra fournies par un dispositif de commande de caméra, afin de créer et de maintenir un motif souhaité de drones avec des poses de caméra souhaitées sur la scène ; et
l'utilisation d'un dispositif de commande de caméra (140) pour recevoir, à partir de la pluralité de drones, une pluralité correspondante d'images capturées de la scène, et pour traiter la pluralité reçue d'images capturées, afin de générer une représentation 3D de la scène en tant que sortie de système, et de fournir les estimations de la première pose de chaque caméra au dispositif de commande de vol ;
dans lequel le contrôleur de caméra comprend :
une pluralité d'agents de drone, chaque agent de drone étant couplé de manière communicative à un et un seul drone correspondant afin de recevoir une première image capturée correspondante ; et
un optimiseur global couplé de manière communicative à chacun des agents de drone et au dispositif de commande de vol ; et
dans lequel les agents de drone et l'optimiseur global dans le dispositif de commande de caméra collaborent pour améliorer de manière itérative, pour chaque drone, une estimation de la première pose et une carte de profondeur caractérisant la scène telle qu'imagée par la caméra de drone correspondante, calculée et exprimée par chaque agent de drone dans un système de coordonnées global, et pour utiliser les estimations et les cartes de profondeur à partir de tous les drones pour créer la représentation en 3D de la scène ; et
dans lequel le dispositif de commande de vol reçoit, à partir du dispositif de commande de caméra, les estimations améliorées de première pose pour chacune des caméras de drone, ajustant la trajectoire de vol correspondante et la pose de caméra de drone en conséquence, si nécessaire ;
dans lequel la collaboration comprend :
la collaboration de chaque agent de drone avec un autre agent de drone pour traiter les premières images capturées par les drones correspondants, à l'aide de données caractérisant ces drones et les paramètres de capture d'image pour les images capturées correspondantes, afin de générer des estimations de la première pose pour les drones correspondants ; et
la collaboration de chaque agent de drone avec l'optimiseur global pour améliorer de manière itérative l'estimation de première pose pour la caméra de drone du drone auquel l'agent de drone est couplé, et pour améliorer de manière itérative la carte de profondeur correspondante.

7. Procédé selon la revendication 6,
dans lequel la carte de profondeur correspondant à chaque drone est générée par un agent de drone correspondant sur la base i) du traitement de la première image et d'une seconde image de la scène, capturées par une caméra de drone correspondante dans une seconde pose correspondante et à un second moment correspondant, et reçues par l'agent de drone correspondant ou ii) du traitement de la première image et des données de profondeur générées par un capteur de profondeur dans un drone correspondant.

8. Procédé selon la revendication 6, dans lequel la génération d'estimations de la première pose de chaque caméra de drone comprend la transformation de données liées à la pose exprimées dans des systèmes de coordonnées locaux, spécifiques à chaque drone, en un système de coordonnées global partagé par la pluralité de drones, la transformation comprenant une combinaison de localisation et de cartographie simultanées (SLAM), et de triangulation multivue (MT).

9. Procédé selon la revendication 7, dans lequel l'optimiseur global :
génère et améliore de manière itérative la représentation 3D de la scène sur la base d'entrée à partir de chacun de la pluralité d'agents de drone, l'entrée comprenant des données caractérisant le drone correspondant, et la première image traitée, l'estimation de première pose et la carte de profondeur correspondantes ; et
fournit les estimations de première pose pour la pluralité de caméras de drone au dispositif de commande de vol.

10. Procédé selon la revendication 9, dans lequel l'amélioration itérative effectuée par l'optimiseur global comprend un processus en boucle dans lequel des estimations de pose de caméra de drone et des cartes de profondeur sont successivement et itérativement améliorées jusqu'à ce que la représentation 3D de la scène satisfasse à un seuil de qualité prédéterminé.
